# EUROPEAN PATENT SPECIFICATION

(11) **EP 3 127 393 B1**
(45) Date of publication and mention of the grant of the patent: **04.10.2017**
(21) Application number: 14888313.5
(22) Date of filing: 04.04.2014
(51) Int. Cl.: H04W 76/02, H04W 36/00, H04W 36/22

(54) **CARRIER AGGREGATION AWARE LOAD DISTRIBUTION**
TRÄGERAGGREGATIONSBEWUSSTE LASTVERTEILUNG
DISTRIBUTION DE CHARGE SENSIBLE À L'AGRÉGATION DE PORTEUSES

(43) Date of publication of application: 08.02.2017
(73) Proprietor: Telefonaktiebolaget LM Ericsson (publ), 164 83 Stockholm (SE)
(72) Inventor: AXELSSON, Håkan, S-582 46 Linköping (SE); AXELSSON, Samuel, S-589 33 Linköping (SE); EKEMARK, Sven, S-743 40 Storvreta (SE)
(74) Representative: Ericsson
(86) International application number: PCT/SE2014/050420
(87) International publication number: WO 2015/152781

(56) References cited:
- EP-A1- 2 568 745
- EP-A1- 2 568 745
- WO-A1-2011/120853
- WO-A1-2013/140202
- WO-A1-2014/005247
- US-A1- 2011 105 140
- US-B2- 8 619 708

## Description

### TECHNICAL FIELD

The present disclosure relates to methods of supporting load distribution between cells in a wireless network using carrier aggregation. The disclosure also relates to network nodes configured for supporting load distribution between cells in a wireless network using carrier aggregation.

### BACKGROUND

3GPP Long Term Evolution, LTE, is the fourth-generation mobile communication technologies standard developed within the 3rd Generation Partnership Project, 3GPP, to improve the Universal Mobile Telecommunication System, UMTS, standard to cope with future requirements in terms of improved services such as higher data rates, improved efficiency, and lowered costs. In a typical cellular radio system, wireless devices or terminals also known as mobile stations and/or user equipment units, UEs, communicate via a radio access network, RAN, to one or more core networks. The Universal Terrestrial Radio Access Network, UTRAN, is the radio access network of a UMTS and Evolved UTRAN, E-UTRAN, is the radio access network of an LTE system. In an UTRAN and an E-UTRAN, a User Equipment, UE, is wirelessly connected to a Radio Base Station, RBS, commonly referred to as a NodeB, NB, in UMTS, and as an evolved NodeB, eNB or eNodeB, in LTE. An RBS is a general term for a radio network node capable of transmitting radio signals to a UE and receiving signals transmitted by a UE.

The RBS provides communication services in one or more areas, or cells. A cell is further associated to at least one frequency band and a radio access technology. User equipment in a cell served by the radio base station receives downlink radio transmissions and/or transmits uplink radio transmissions to the radio base station at a carrier frequency. In time division duplex, TDD, the same carrier frequency is used for both uplink and downlink, while in frequency division duplex, different carriers frequencies are used, typically at a specific duplex frequency separation. In the sequel, the main description concerns, without loss of generality, downlink communication and the same can be applied for uplink as well, and either FDD or TDD or combinations can be considered.

In order to increase capacity in a network, the operator may deploy cells on multiple frequency bands, i.e. aggregating multiple carriers. When multiple carriers are available, it is possible to deploy several cells with similar coverage area, or different coverage area, each at a different carrier than the other.

When aggregating multiple carriers, each carrier is referred to as a component carrier. Carrier aggregation is used in LTE, i.e. LTE-Advanced, in order to increase the bandwidth for one user equipment, and thereby increase the bitrate. In Carrier Aggregation, CA, two or more Component Carriers, CCs, are aggregated for one terminal in order to support wider transmission bandwidths.

A terminal using carrier aggregation has a downlink primary component carrier and an uplink primary component carrier. In addition, it may have one or several secondary component carriers in each direction. Different terminals may have different carriers as their primary component carrier, i.e. the primary component carrier configuration is terminal specific. Carrier aggregation implies that a UE receives or transmits on multiple component carriers. In the case of carrier aggregation in LTE, multiple LTE carriers, each with a bandwidth of up to 20MHz, can be transmitted in parallel to/from the same terminal, thereby allowing for an overall wider bandwidth and correspondingly higher per-link data rates.

It is possible to configure a UE to aggregate a different number of CCs originating from the same eNB and of possibly different bandwidths in the UL and the DL. The number of DL CCs that can be configured depends on the DL aggregation capability of the UE and the network. The number of UL CCs that can be configured depends on the UL aggregation capability of the UE and the network. CCs originating from the same eNB need not to provide the same coverage.

When carrier aggregation is activated, there may be a number of serving cells; in principle there may be one serving cell for each component carrier. However, the RRC connection is only handled by one cell, the cell corresponding to the primary component carrier. This cell is referred to as the primary cell. The other component carriers are all referred to as secondary component carriers, serving secondary cells. The secondary component carriers are added and removed as required, while the primary component carriers are only changed at handover.

All idle mode procedures apply to the primary component carrier only, i.e. carrier aggregation with additional secondary carriers configured only applies to terminals in an RRC-CONNECTED state. Upon connection to the network, the terminal performs the related procedures such as cell search and random access following the same steps as in the absence of carrier aggregation. When going from IDLE to CONNECTED mode the wireless device performs attach to the cell which the wireless device is currently camping on. The cell to which the wireless device successfully attaches is the primary cell of this wireless device. When a communication between the network and the terminal has been established, additional secondary component carriers can be configured.

For load management, each cell calculates the current CONNECTED load and compares this with load reports received from neighbor cells. If a neighbor cell has less load than a cell receiving load reports, a handover or release with redirect is performed to move one or several UEs from a source cell having the higher load to a target cell with lesser load, i.e. a load management triggered action. Present load management actions are triggered based on connected load of a source and target cell, overlooking further load related aspects of the wireless.

European patent application EP 2 568 745 A1, describes a method for handover of a user equipment from a source eNB to a destination eNB in a system using carrier aggregation.

### SUMMARY

The present invention is defined by a method performed in a source network node according to claim 1, a method performed in a target network node according to claim 8, by a source network node according to claim 15, a target network node according to claim 17 and by a computer program according to claim 20. It is an object of the present disclosure to improve load management in a wireless network. In particular, it is an object of the disclosure to provide embodiments supporting load distribution between cells of a wireless network being configured for carrier aggregation.

The proposed solutions enables improved load management, optimizing load distribution for carrier aggregation capable user equipment as well as for user equipment lacking carrier aggregation capability.

This is achieved by a method performed in a source network node, a method performed in a target network node, a network configured to perform the disclosed methods and a computer-readable storage medium including a computer program run in the network node.

The disclosure presents a method embodiment, performed in a source network node defining a source cell, of supporting load distribution from the source cell to a target cell in a wireless network using carrier aggregation. The method comprises determining source traffic load and carrier aggregation properties of the source cell. A load report comprising target traffic load and carrier aggregation properties of the target cell is received from a target network node. The Carrier aggregation capabilities of user equipment, UE, served by the source cell are retrieved. Finally, a selection is made of one or more UEs served by the source cell for moving to the target cell based on a combination of the retrieved UE carrier aggregation capabilities and the carrier aggregation properties of the source cell and target cell.

The presented method embodiment provides for improved load management, optimizing load distribution for carrier aggregation capable user equipment as well as for user equipment lacking carrier aggregation capability. This will increase performance as well as capacity of the wireless network. Use of the disclosed method provides for a more similar and fair end user experience.

According to an aspect of the disclosure, the method further comprises selecting one or more UEs for moving to the target cell; and sending information to a target network node of the target cell on the selected one or more UEs.

The ability to select UEs for moving to a target cell based on a combination of UE carrier aggregation capabilities as aggregation properties of the source cell and the target cell makes it possible to favor moving carrier aggregation capable user equipment to target cells supporting the capabilities of the user equipment and to favor moving non-CA-capable users to target cells lacking support for carrier aggregation; thereby further optimizing performance and capability of the wireless network as well as the end user experience.

According to an aspect of the disclosure, the selecting of one or more UEs to move from the source cell to the target cell is performed when a ratio between the source traffic load and the target traffic load exceeds a threshold value.

Accordingly, load distribution is configurable allowing a higher or lesser load in a target cell than in a source cell, e.g. depending on the carrier aggregation properties of the cells.

According to an aspect of the disclosure, the carrier aggregation properties comprise a number of component carriers possible to aggregate using the cell as a primary cell.

According to an aspect of the disclosure, the user equipment carrier aggregation capabilities comprise information on the UE capability to support multiple component carriers on the uplink and/or downlink.

Accordingly, it possible to move a carrier aggregation capable user equipment to a target cell that has a component carrier capability corresponding to that of the UE.

According to an aspect of the disclosure the UE carrier aggregation capabilities are retrieved from RRC, Radio Resource Control signaling messages.

According to an aspect of the disclosure, the carrier aggregation properties of the source cell comprises information on one or more secondary cells associated with the source cell and/or wherein the carrier aggregation properties of the target cell comprises information on one or more secondary cells associated with the target cell.

According to an aspect of the disclosure, the information on a secondary cell comprises a total capacity of the secondary cell.

According to an aspect of the disclosure, the information on a secondary cell comprises a current load in the secondary cell.

According to an aspect of the disclosure, information on a secondary cell comprises information on one or more frequency bands of the secondary cell.

Thus, the load management will be improved by having access to load reports including carrier aggregation properties.

According to an aspect of the disclosure, the source traffic load comprises traffic load of UEs connected to the source cell including traffic load in one or more secondary cells associated with the source cell and/or wherein the target traffic load comprises traffic load of UEs connected to the target cell including traffic load in one or more secondary cells associated with the target cell.

The disclosure also presents a method embodiment, performed in a target network node of a target cell, of supporting load distribution from a source cell to the target cell in a wireless network using carrier aggregation. The method comprises determining target traffic load and carrier aggregation properties of the target cell and sending, to the source network node, a load report comprising the determined target traffic load and carrier aggregation properties thereby enabling selection in the receiving source network node of one or more UEs served by the source cell for moving to the target cell.

According to an aspect of the disclosure, the method further comprises receiving information on one or more UEs served by the source cell selected for moving to the target cell.

According to an aspect of the disclosure, the step of determining is performed with a preconfigured periodicity.

According to an aspect of the disclosure, the carrier aggregation properties comprise a number of component carriers that can be aggregated using the target cell as a primary cell.

According to an aspect of the disclosure, the carrier aggregation properties comprise a total bandwidth that can be aggregated using the target cell as a primary cell.

According to an aspect of the disclosure, the carrier aggregation properties of the target cell comprise information on one or more secondary cells associated with the target cell.

According to an aspect of the disclosure, the information on a secondary cell comprises a total traffic load capacity of the secondary cell.

According to an aspect of the disclosure, the information on a secondary cell comprises a current traffic load in the secondary cell.

According to an aspect of the disclosure, the information on a secondary cell comprises information on one or more frequency bands of the secondary cell.

According to an aspect of the disclosure, the target traffic load comprises traffic load of UEs connected to the target cell including traffic load in one or more secondary cells associated with the target cell.

The disclosure also presents a network node of a source cell, arranged to support load distribution from the source cell to a target cell in a wireless network using carrier aggregation, the network node comprising a processor, a communication interface, and a memory. The memory contains instructions executable by said processor whereby the network node is operative to determine source traffic load and carrier aggregation properties of the source cell; to receive, from a target network node, a load report comprising target traffic load and carrier aggregation properties determined for the target cell; to retrieve user equipment, UE, carrier aggregation capabilities of UEs served by the source cell; and to select one or more UEs served by the source cell for moving to the target cell based on a combination of the retrieved UE carrier aggregation capabilities and the carrier aggregation properties of the source cell and target cell.

The disclosure also presents a network node of a target cell, arranged to support load distribution from a source cell to the target cell in a wireless network using carrier aggregation, the network node comprising a processor, a communication interface, and a memory. The memory contains instructions executable by said processor whereby the network node is operative to determine target traffic load and carrier aggregation properties of the target cell; and to send, to the source network node, a load report comprising the determined target traffic load and carrier aggregation properties thereby enabling selection in the receiving source network node of one or more UEs served by the source cell for moving to the target cell.

The disclosure also relates to a computer-readable storage medium, having stored thereon a computer program which when run in a network node, causes the network node to perform the disclosed methods.

The network nodes and the computer-readable storage medium each display advantages corresponding to the advantages already described in relation to the disclosure of the method in a network node.

### BRIEF DESCRIPTION OF THE DRAWINGS

Further objects, features and advantages of the present disclosure will appear from the following detailed description, wherein some aspects of the disclosure will be described in more detail with reference to the accompanying drawings, in which:
- Figure 1: a. shows the basic LTE architecture
b. discloses a network node, e.g. eNB, with multiple cells.
- Figure 2: is a schematic illustration of cell relations
- Figure 3: is a flow chart schematically illustrating embodiments of method steps performed in a source network node of a source cell
- Figure 4: is a flow chart schematically illustrating embodiments of method steps performed in a target network node of a target cell
- Figure 5: is a block diagram schematically illustrating a network node embodiment
- Figure 6: is a is a block diagram schematically illustrating a network node embodiment

### DETAILED DESCRIPTION

The general object or idea of embodiments of the present disclosure is to address at least one or some of the disadvantages with the prior art solutions described above as well as below. The various steps described below in connection with the figures should be primarily understood in a logical sense, while each step may involve the communication of one or more specific messages depending on the implementation and protocols used.

Embodiments of the present disclosure relate, in general, to the field load management in a wireless network. In particular, the disclosure relates to load distribution between cells of a wireless network being configured for carrier aggregation.

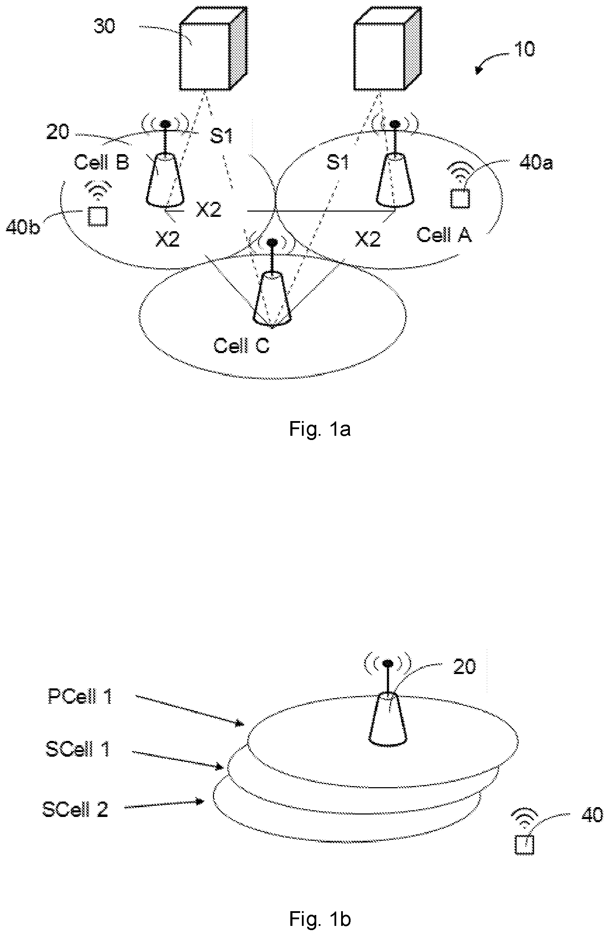

Figure 1a schematically illustrates a basic LTE, Long Term Evolution, network architecture, including radio base stations, RBS, arranged for communicating with wireless devices over a wireless communication interface. The plurality of RBSs, here shown as eNBs, is connected to MME/S-GW entities via S1 interfaces. The eNBs are connected to each other via X2 interfaces. In a typical cellular radio system, wireless devices communicate via a radio access network, RAN, with one or more core networks. The wireless devices can be mobile stations or other types of user equipment, UE, such as portable, pocket, hand-held, computer-included, or car-mounted mobile devices which communicate voice and/or data with radio access network, e.g., mobile telephones and laptops with wireless capability. The RAN covers a geographical area which is divided into cell areas, with each cell area or group of cell areas being served by a radio access node. A cell is a geographical area where radio coverage is provided by equipment at the radio access node. Each cell is identified by an identity within the local radio area. The radio access nodes communicate over the air interface with the wireless devices within the cells served by the node. Figure 1a discloses the architecture of a LTE system 10, including radio access nodes 20, also known as eNodeBs, evolved NodeBs or eNBs, and evolved packet core nodes 30, disclosed as MME/S-GW. Wireless device 40 connects to the radio access network, RAN, by means of one or more radio access nodes 20.

A wireless device camps on one cell at a time, i.e. has one serving cell. When going from IDLE to CONNECTED mode, the wireless device performs attach to the cell which the wireless device is currently camping on. The cell to which the wireless device successfully attaches is the primary cell of the wireless device. Figure 1a discloses a cell structure, wherein the wireless device 40a belongs to Cell A, and thus connects to cell A as primary cell.

Carrier aggregation enables the UE to have one or more secondary cells; such a cell structure is illustrated in Figure 1b, wherein the radio access node 40 has several cells configured as different component carriers for the UE. One component carrier is the primary cell, PCell and the other illustrated component carriers are secondary cells, SCells.

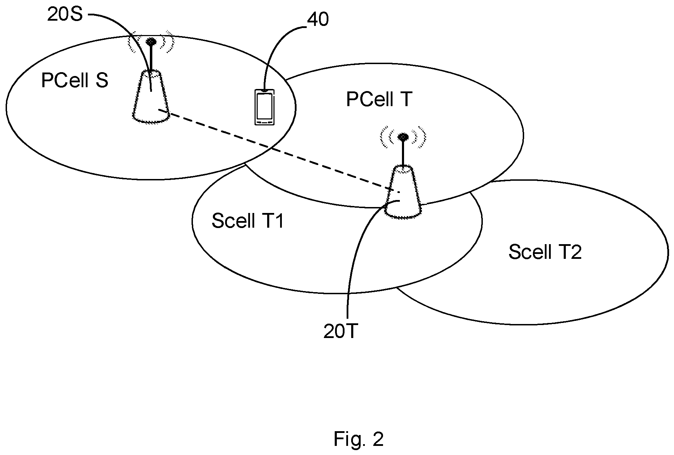

Figure 2 schematically illustrates a source network node 20S, e.g. an eNB, defining a source cell PCell S. A UE 40 is connected to the source cell PCell S; thus, the UE connects to the source cell as primary cell. The disclosed source network node lacks the ability to aggregate carriers of secondary cells. Figure 2 also discloses a target network node, e.g. an eNB, defining a target cell PCell T. The target cell can use two other cells SCell T1 and SCell T2 as secondary cells when a carrier aggregation capable user equipment that has appropriate carrier aggregation capabilities connects to the target cell.

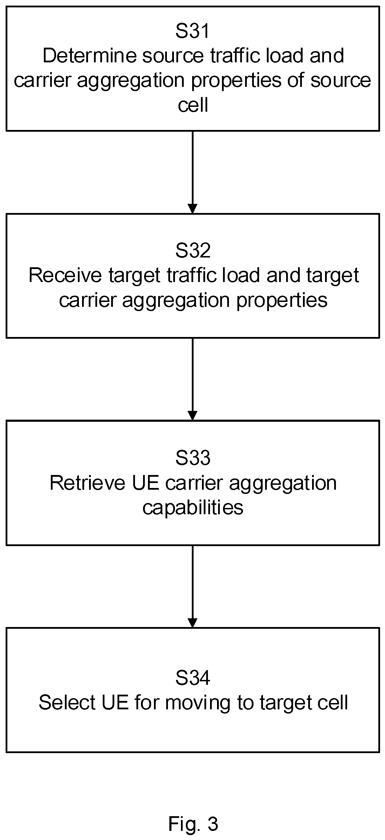

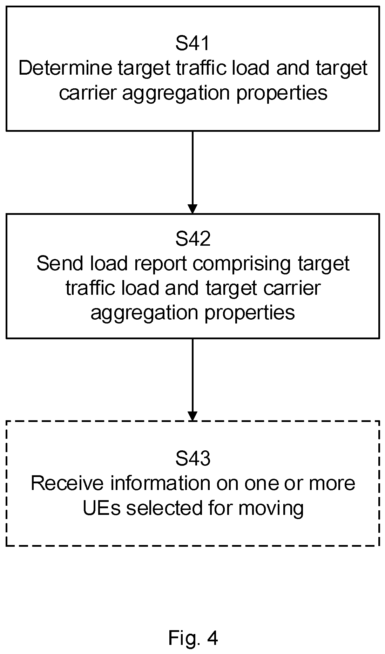

Figure 3 is a flow chart schematically illustrating embodiments of method steps performed in a source network node, e.g. the source network node 20S illustrated in Figure 2, to support load distribution to a target cell, e.g. the target network node 20T. The source network node serves one or more user equipment in the source cell. The disclosed method relates to load distribution from a source cell to a target cell in a wireless network using carrier aggregation, e.g. the network schematically illustrated in Fig. 2. Figure 4 is a flow chart schematically illustrating the method steps as performed in a target network node.

In a first step S31, the source traffic load and carrier aggregation properties of the source cell are determined. The source traffic load comprises traffic load of UEs connected to the source cell including traffic load in one or more secondary cells associated with the source cell. According to an aspect of the disclosure, the source traffic load also comprises traffic load of UEs using the cell as secondary cell.

For the example illustrated in Figure 2, the source network load corresponds to the traffic load of UE 40. In the illustrated example, the source cell is not capable of aggregating carriers from secondary cells. Consequently, the carrier aggregation properties determined for the source cell in the source network node would reflect, e.g. that there are no carriers possible to aggregate in the source cell. In a different situation wherein the source cell may use one or more other cells as secondary cells, the carrier aggregation properties determined for the source cell could comprise any of the following examples of properties relevant for understanding the carrier aggregation capability of the source cell:
- Number of carriers that the source cell can aggregate, i.e. a number of component carriers possible to aggregate using the source cell as a primary cell.
- Total bandwidth the source cell can aggregate, i.e. a total bandwidth possible to aggregate using the source cell as a primary cell.
- Secondary cell information, i.e. information on one or more secondary cells associated with the source cell.

Examples of such secondary cell information comprises total traffic load capacity of the secondary cell, current traffic load in the secondary cell and one or more frequency bands of the secondary cell.

In a second step S32, the source network node receives, from a target network node, a load report comprising target traffic load and carrier aggregation properties determined for the target cell. For the example illustrated in Figure 2, there are no user equipments connected to the target network node 20T. Consequently, there is no data traffic in the radio interface and the load report would imply a significant capacity for load redistribution. Furthermore, as illustrated in Figure 2, the target cell is capable of using two further cells SCell T1 and SCell T2 as secondary cells. Consequently, the carrier aggregation properties for the target source cell determined in the target network node and reported in a load report to the source network node would reflect, e.g. that there are two secondary cells possible to use in the target cell. The carrier aggregation properties determined for the target cell could comprise any of the following examples of properties relevant for understanding the carrier aggregation capability of the source cell:
- Number of carriers that the target cell can aggregate, i.e. a number of component carriers possible to aggregate using the target cell as a primary cell.
- Total bandwidth the target cell can aggregate, i.e. a total bandwidth possible to aggregate using the target cell as a primary cell.
- Secondary cell information, i.e. information on one or more secondary cells associated with the target cell.

Examples of such secondary cell information comprises total traffic load capacity of the secondary cell, current traffic load in the secondary cell and one or more frequency bands of the secondary cell.

From a perspective of the target network node, as disclosed in the flowchart of Figure 4, the target network node determines a target traffic load and carrier aggregation properties of the target cell and sends a load report to a receiving source network node comprising the determined target traffic load and carrier aggregation properties as discussed with reference to Figure 3 above. According to an aspect of the disclosure, the target traffic load comprises traffic load of UEs using the cell as secondary cell.

According to an aspect of the disclosure, the determining and/or load reporting is performed with a preconfigured periodicity.

Presently, load reports are used to exchange information on traffic load between neighboring cells. The combination of traffic load with carrier aggregation properties in a report from the target network node is handled as an extended load report; extended by including CA properties of each target cell. E.g., if a target cell can use two other cells as secondary cells that target cells compiles relevant information for each of the two secondary cells and includes it in the extended load report together with the load information for the target cell itself.

Cells that can be used as secondary cells are typically defined as neighboring cells. The most important static properties of a neighboring cell, like frequency band, are typically stored in the configuration model. The configuration model is therefore typically used to retrieve static information for a cell that can be used as secondary cell.

General CA properties of a target cell, like number of carriers that can be aggregated, are also typically stored in the configuration model.

Dynamic properties, like load, on the other hand are typically not stored in the configuration model. However, cells that can be used as secondary cells are typically suitable as load balancing candidates. The cell indicated as target cell will receive load reports from the cells indicated as secondary cells and the target cell will include that information when sending load reports to the source cell.

The transfer of dynamic properties for load balancing purposes between separate radio base stations providing cells covering a common area is typically performed via the network signaling interfaces, like the X2 interface specified in the 3GPP standard for LTE (3GPP TS 36.423).

In a following step S33, carrier aggregation capabilities of user equipments, UEs, served by the source cell is retrieved. According to an aspect of the disclosure, the UE indicates its carrier aggregation capabilities to the serving source network node via RRC signaling. The carrier aggregation capability of the UE reflects the UE capability to support multiple component carriers on the downlink and/or uplink via Radio Resource Control, RRC, signaling, e.g. to support one or more SCells in the downlink as well as one or more SCells in the uplink.

According to an aspect of the disclosure, CA capable UEs can be configured with one or more SCell in uplink and/or downlink via RRC signaling, using the message RRCConnectionReconfiguration and the information element sCellToAddModList-r10.

SCells of a CA configured UE are, e.g. activated via signaling from the serving base station, using an activation MAC control element. Data is scheduled at one or more of the SCells via control signaling from the base station. This control signaling is, e.g. sent via the physical control channel and MAC control element referring to a downlink SCell resource and/or an uplink SCell resource. Moreover, if cross-carrier scheduling is supported, the SCell resource assignment is signaled to the UE via the PCell physical control channel and/or MAC control elements.

When the UE is scheduled over two or more component carriers, the data will be mapped to Physical Resource Blocks PRBs both on the PCell as well as the SCell(s).

In a step S34, the source network node selects one or more UEs served by the source cell for moving to the target cell based on a combination of the retrieved UE carrier aggregation capabilities and the carrier aggregation properties of the source cell and target cell. According to an aspect of the disclosure, different UEs are ranked with regard to how suitable they are to be moved to a target cell. The ranking is improved by considering the UE carrier aggregation potential in the different cells which are eligible for load distribution, i.e. load balancing actions. The UE carrier aggregation potential for a specific cell depends on the CA capability but also on carrier aggregation properties of the considered cell. The ranking provides for a simplified selection of UEs to move to a target cell for load balancing or load distribution purposes. According to an aspect of the disclosure, a ranking function is proposed:
rankingFunction(ueProperties, sourceCellProperties, targetCellProperties)
where:
   UE properties are provided to the source network node via RRC signaling
   Cell properties includes the cell's CA properties

As previously described, carrier aggregation properties are compiled in both the source cell and the target cell.

The ranking score that the above function provides can be used both in absolute terms and in relative terms. As an example:
Absolute: A user needs to score above a certain threshold in order to be moved to a target cell
Relative: A user with higher ranking score is better suited to be moved to a target cell than a user with lower ranking score.

Examples of ranking function properties that may increase the CA utilization in the network and thereby increase the system performance/capacity:
Higher score if a UE supports a larger total aggregated bandwidth in target cell compared to source, and vice versa.

According to an aspect of the disclosure, the cell properties introduced in the ranking function also include traffic load of the cell. The ranking function then provides the result of a higher score if the load in the target cell and its secondary cells is lower than in the source cell and its secondary cells, and vice versa.

The method of selecting one or more UEs for moving to a target cell is performed when a traffic load assessment demonstrates that there are benefits to gain by redistribution load from the source cell to the target cell, e.g. when a ratio between the source traffic load and the target traffic load exceeds a threshold value. According to an aspect of the disclosure, the source traffic load comprises traffic load of UEs connected to the source cell including traffic load in one or more secondary cells associated with the source cell and the target traffic load comprises traffic load of UEs connected to the target cell including traffic load in one or more secondary cells associated with the target cell.

Although the 3GPP standard provides basic support for load management, an extension of the standard application protocol for the X2 interface is anticipated for the above disclosed purposes, wherein the traffic load status for the cells that a network node, i.e. a radio base station, handles and the potential SCells associated with those is sent in status messages between the base stations involved.

Table 1 shows an example of such an extension message to the 3GPP standard, wherein the CR Status Report List IE contains a list of cells the radio base station sending the message handles. For each cell in the list, a Traffic Load Status IE for that cell may be provided and optionally a list of possible SCell candidates (SCell Candidate List IE; shaded row).

**Table 1 Cell Resource status report message**

| **IE/Group Name** | **Presence** | **Range** | **IE type and reference** | **Semantics description** | **Criticality** |
|---|---|---|---|---|---|
| EAB Message Type | M | | | | Yes: ignore |
| eNB1 Measurement ID | M | | | Allocated in eNB₁ | Yes: reject |
| eNB2 Measurement ID | M | | | Allocated in eNB₂ | Yes: reject |
| **CR Status Report List** | | *1 to maxCellineNB* | | | G: ignore |
| >Cell ID | M | | *ECGI* IE | ECGI of reported cell | - |
| >Traffic Load Status | 0 | | | | - |
| >Frequency band indicator | *C-ifSCell* | | INTEGER (1..256, ...) | E-UTRA operating band | - |
| >SCell Candidate List | 0 | | ***Error! Reference source not found.** below* | Candidate SCell list for the reported PCell | - |
| | | | | | |

| **Condition/Range bound** | | **Explanation** | | | |
|---|---|---|---|---|---|
| *ifSCell* | | The IE is present if reported cell is an item in any *SCell Candidate List* IE. | | | |
| *maxCellineNB* | | Maximum number of cells served in one eNB. The value is 256. | | | |

Table 2 shows an example of a possible SCell Candidate List IE for this extension message.

**Table 2 SCell Candidate List IE**

| **IE/Group Name** | **Presence** | **Range** | **IE type and reference** | **Semantics description** |
|---|---|---|---|---|
| **SCell Candidate List** | | *1 to maxCellineNB* | | |
| >Cell ID | M | | *ECGI* IE | ECGI of sCell |
| | | | | |

| **Condition/Range bound** | | **Explanation** | | |
|---|---|---|---|---|
| *maxCellineNB* | | Maximum number of cells served in one eNB. The value is 256. | | |

Based on the SCell Candidate List IE attached to a cell in the CR Status Report List IE, the radio base station receiving this message is able to determine which CA combinations are available in the radio base station sending the message. It is also able to extract the traffic load status information for the SCell candidates, given that the radio base station sending the message includes them in the CR Status Report List IE.

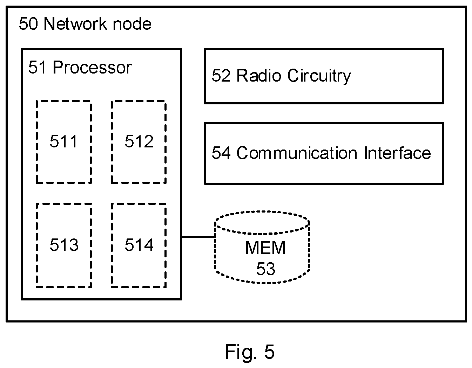

Figure 5 is a block diagram schematically illustrating an example embodiment of a network node for performing the method step embodiments. Figure 5 illustrates a network node of a source cell. The network node, as illustrated in the block diagram, is also conceivable as a network node of a target cell, e.g. as a network node of a source cell as well as of a target cell.

The network node comprises a processor 51, or a processing circuitry that may be constituted by any suitable Central Processing Unit, CPU, microcontroller, Digital Signal Processor, DSP, etc. capable of executing computer program code. The computer program may be stored in a memory, MEM 53. The memory 53 can be any combination of a Random Access Memory, RAM, and a Read Only Memory, ROM. The memory 53 may also comprise persistent storage, which, for example, can be any single one or combination of magnetic memory, optical memory, or solid state memory or even remotely mounted memory. The network node 50 further comprises radio circuitry 52 configured for radio communication with user equipment connected to the network node. A communication interface 54 is arranged for communication with neighboring network nodes via network signaling interfaces, e.g. the X2 interface.

According to one aspect the disclosure further relates to a computer-readable storage medium, having stored thereon the above mentioned computer program which when run in a network node, causes the node to perform the disclosed method embodiments.

When the above mentioned computer program is run in the processor of a network node 50 of a source cell, it causes the node to determine source traffic load and carrier aggregation properties of the source cell; to receive, from a target network node, a load report comprising target traffic load and carrier aggregation properties determined for the target cell, to retrieve user equipment, UE, carrier aggregation capabilities of UEs served by the source cell; and to select one or more UEs served by the source cell for moving to the target cell based on a combination of the retrieved UE carrier aggregation capabilities and the carrier aggregation properties of the source cell and target cell.

The network node 50 of a source cell is further operative to carry out all aspects of the previously disclosed method performed in the source network node.

According to a further aspect of the disclosure, processor 51 further comprises one or several of:
a load report compiling module 511 configured to compile traffic load and carrier aggregation properties of the cell;
a load report reception module 512 configured to receive a load report comprising target traffic load and carrier aggregation properties determined for the target cell;
a UE carrier aggregation capability retrieval module 513 configured to retrieve carrier aggregation capabilities of user equipments, UEs, served by the source cell;
a load distribution selection module 514 configured to select one or more UEs served by the source cell for moving to the target cell based on a combination of the retrieved UE carrier aggregation capabilities and the carrier aggregation properties of the source cell and target cell.

The load compiling module 511, the load report reception module 512, the UE carrier aggregation capability retrieval module 513 and the load distribution selection module 514 are implemented in hardware or in software or in a combination thereof. The modules 511, 512, 513 and 514 are according to one aspect implemented as a computer program stored in a memory 53 which run on the processor 51.

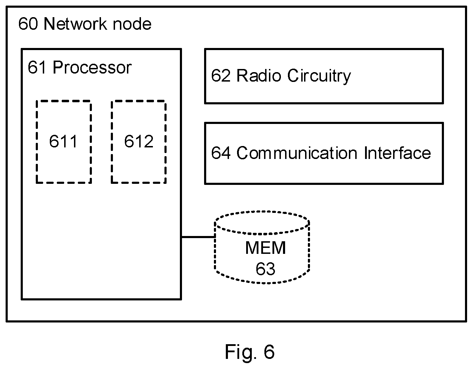

Figure 6 is a block diagram schematically illustrating an example embodiment of a network node for performing the method step embodiments. The network node, as illustrated in the block diagram, is also conceivable as a network node of a source cell, e.g. as a network node of a source cell as well as of a target cell.

The network node comprises a processor 61, or a processing circuitry that may be constituted by any suitable Central Processing Unit, CPU, microcontroller, Digital Signal Processor, DSP, etc. capable of executing computer program code. The computer program may be stored in a memory, MEM 63. The memory 63 can be any combination of a Random Access Memory, RAM, and a Read Only Memory, ROM. The memory 63 may also comprise persistent storage, which, for example, can be any single one or combination of magnetic memory, optical memory, or solid state memory or even remotely mounted memory. The network node 60 further comprises radio circuitry 62 configured for radio communication with user equipment connected to the network node. A communication interface 64 is arranged for communication with neighboring network nodes via network signaling interfaces, e.g. the X2 interface.

According to one aspect the disclosure further relates to a computer-readable storage medium, having stored thereon the above mentioned computer program which when run in a network node, causes the node to perform the disclosed method embodiments.

When the above mentioned computer program is run in the processor of a network node 60 of a target cell, it causes the node to determine target traffic load and carrier aggregation properties of the target cell, and to send, to the source network node, a load report comprising the determined target traffic load and carrier aggregation properties thereby enabling selection in the receiving source network node of one or more UEs served by the source cell for moving to the target cell.

The network node 60 of a target cell is further operative to carry out all aspects of the previously disclosed method performed in the target network node.

The disclosure also relates to a computer-readable storage medium, having stored thereon a computer program which when run in a network node, causes the network node to perform the disclosed method.

According to a further aspect of the disclosure, processor 61 further comprises one or several of:
a load determining module 611 configured to determine traffic load and carrier aggregation properties of the target cell; and
a load reporting module 612 configured to send, to the source network node, a load report comprising the determined target traffic load and carrier aggregation properties thereby enabling selection in the receiving source network node of one or more UEs served by the source cell for moving to the target cell.

The load determining module 611 and the load reporting module 612 are implemented in hardware or in software or in a combination thereof. The modules 611 and 612 are according to one aspect implemented as a computer program stored in a memory 63 which run on the processor 61.

## Claims

1. A method, performed in a source network node (20S) of a source cell, of supporting load distribution from a source cell to a target cell in a wireless network using carrier aggregation, the method being **characterized by** the steps of:
- determining (S31) source traffic load and carrier aggregation properties of the source cell,
- receiving (S32), from a target network node, a load report comprising target traffic load and carrier aggregation properties for the target cell,
- retrieving (S33) user equipment, UE, carrier aggregation capabilities of UEs served by the source cell; and
- selecting (S34) one or more UEs served by the source cell for moving to the target cell based on a combination of the retrieved UE carrier aggregation capabilities and the carrier aggregation properties of the source cell and target cell.

2. The method of claim 1, wherein the selecting of one or more UEs to move from the source cell to the target cell is performed when a ratio between the source traffic load and the target traffic load exceeds a threshold value.

3. The method of claim 1 or 2, wherein the carrier aggregation properties comprise a number of component carriers possible to aggregate using the cell as a primary cell.

4. The method of any of claims 1-3, wherein the carrier aggregation properties comprise a total bandwidth possible to aggregate using the cell as a primary cell.

5. The method of any of claims 1-4, wherein the user equipment carrier aggregation capabilities comprise information on the UE capability to support multiple component carriers on the uplink and/or downlink.

6. The method of any of the preceding claims, wherein the carrier aggregation properties of the source cell comprises information on one or more secondary cells associated with the source cell and/or wherein the carrier aggregation properties of the target cell comprises information on one or more secondary cells associated with the target cell.

7. The method of any of the preceding claims, wherein the source traffic load comprises traffic load of UEs connected to the source cell including traffic load in one or more secondary cells associated with the source cell and/or wherein the target traffic load comprises traffic load of UEs connected to the target cell including traffic load in one or more secondary cells associated with the target cell.

8. A method, performed in a target network node (20T) of a target cell, of supporting load distribution from a source cell to the target cell in a wireless network using carrier aggregation, the method being **characterized by** the steps of:
- determining (S41) target traffic load and carrier aggregation properties of the target cell,
- sending, (S42) to the source network node, a load report comprising the determined target traffic load and carrier aggregation properties.

9. The method of claim 8, further comprising receiving information on one or more UEs served by the source cell selected for moving to the target cell.

10. The method of claim 8 or 9, wherein the step of determining is performed with a preconfigured periodicity.

11. The method of any of claims 8-10, wherein the carrier aggregation properties comprise a number of component carriers that can be aggregated using the cell as a primary cell.

12. The method of any of claims 8-11, wherein the carrier aggregation properties comprise a total bandwidth that can be aggregated using the cell as a primary cell.

13. The method of claims 8-12, wherein the carrier aggregation properties of the target cell comprises information on one or more secondary cells associated with the target cell.

14. The method of any of claims 8-13, wherein the target traffic load comprises traffic load of UEs connected to the target cell including traffic load in one or more secondary cells associated with the target cell.

15. A network node (50) of a source cell, arranged to support load distribution from the source cell to a target cell, the network node comprising a processor (51), a communication interface (54), and a memory (53), said memory containing instructions executable by said processor whereby the network node is **characterized by** being operative to:
- determine source traffic load and carrier aggregation properties of the source cell,
- receive, from a target network node, a load report comprising target traffic load and carrier aggregation properties determined for the target cell,
- retrieve user equipment, UE, carrier aggregation capabilities of UEs served by the source cell; and
- select one or more UEs served by the source cell for moving to the target cell based on a combination of the retrieved UE carrier aggregation capabilities and the carrier aggregation properties of the source cell and target cell.

16. The network node of claim 15, wherein the carrier aggregation properties comprise:
- a number of component carriers possible to aggregate using the cell as a primary cell and/or
- a total bandwidth possible to aggregate using the cell as a primary cell.

17. A network node (60) of a target cell, arranged to support load distribution from a source cell to the target cell, the network node comprising a processor (61), a communication interface (64), and a memory (63), said memory containing instructions executable by said processor whereby the network node is **characterized by** being operative to:
- determine target traffic load and carrier aggregation properties of the target cell,
- send, to the source network node, a load report comprising the determined target traffic load and carrier aggregation properties.

18. A network node of claim 17, further operative to receive information on one or more UEs served by the source cell selected for moving to the target cell.

19. The network node of claim 17 or18, further operative to determine target traffic load and carrier aggregation properties with a preconfigured periodicity.

20. A computer-readable storage medium, having stored thereon a computer program which when run in a network node, causes the network node to perform the method as claimed in any of claims 1-14.

## Patentansprüche

1. Verfahren, durchgeführt in einem Quellennetzwerkknoten (20S) einer Quellenzelle, zum Unterstützen von Lastverteilung von einer Quellenzelle zu einer Zielzelle in einem drahtlosen Netzwerk unter Verwendung von Trägerbündelung, wobei das Verfahren durch die Schritte gekennzeichnet ist:
- Bestimmen (S31) von Quellenverkehrslast und Trägerbündelungseigenschaften der Quellenzelle,
- Empfangen (S32) einer Lastmeldung von einem Zielnetzwerkknoten, die Zielverkehrslast und Trägerbündelungseigenschaften für die Zielzelle umfasst,
- Abrufen (S33) von Benutzereinrichtungs-(UE-)Trägerbündelungsfähigkeiten von UEs, die durch die Quellenzelle versorgt werden; und
- Auswählen (S34) von einer oder mehreren durch die Quellenzelle versorgten UEs zum Umziehen zur Zielzelle auf der Grundlage einer Kombination aus den abgerufenen UE-Trägerbündelungsfähigkeiten und den Trägerbündelungseigenschaften der Quellenzelle und der Zielzelle.

2. Verfahren nach Anspruch 1, worin das Auswählen von einer oder mehreren UEs, die von der Quellenzelle zur Zielzelle umziehen sollen, durchgeführt wird, wenn ein Verhältnis zwischen der Quellenverkehrslast und der Zielverkehrslast einen Schwellenwert übersteigt.

3. Verfahren nach Anspruch 1 oder 2, worin die Trägerbündelungseigenschaften eine Anzahl von Komponententrägern umfassen, die bei Verwendung der Zelle als eine primäre Zelle gebündelt werden können.

4. Verfahren nach einem der Ansprüche 1 bis 3, worin die Trägerbündelungseigenschaften eine Gesamtbandbreite umfassen, die bei Verwendung der Zelle als eine primäre Zelle gebündelt werden kann.

5. Verfahren nach einem der Ansprüche 1 bis 4, worin die Benutzereinrichtungsträgerbündelungseigenschaften Information über die UE-Fähigkeit, mehrere Komponententräger auf der Aufwärtsstrecke und/oder Abwärtsstrecke zu unterstützen, umfassen.

6. Verfahren nach einem der vorhergehenden Ansprüche, worin die Trägerbündelungseigenschaften der Quellenzelle Information über eine oder mehrere der Quellenzelle zugeordnete sekundäre Zellen umfassen und/oder worin die Trägerbündelungseigenschaften der Zielzelle Information über eine oder mehrere der Zielzelle zugeordnete sekundäre Zellen umfassen.

7. Verfahren nach einem der vorhergehenden Ansprüche, worin die Quellenverkehrslast die Verkehrslast von mit der Quellenzelle verbundenen UEs einschließlich der Verkehrslast in einer oder mehreren der Quellenzelle zugeordneten sekundären Zellen umfasst und/oder worin die Zielverkehrslast die Verkehrslast von mit der Zielzelle verbundenen UEs einschließlich der Verkehrslast in einer oder mehreren der Zielzelle zugeordneten sekundären Zellen umfasst.

8. Verfahren, durchgeführt in einem Zielnetzwerkknoten (20T) einer Zielzelle, zum Unterstützen von Lastverteilung von einer Quellenzelle zur Zielzelle in einem drahtlosen Netzwerk unter Verwendung von Trägerbündelung, wobei das Verfahren durch die Schritte gekennzeichnet ist:
- Bestimmen (S41) von Zielverkehrslast und Trägerbündelungseigenschaften der Zielzelle,
- Senden (S42) einer Lastmeldung an den Zielnetzwerkknoten, welche die bestimmten Zielverkehrslast und Trägerbündelungseigenschaften umfasst.

9. Verfahren nach Anspruch 8, ferner umfassend: Empfangen von Information über eine oder mehrere zum Umziehen zur Zielzelle ausgewählte UEs, die durch die Quellenzelle versorgt werden.

10. Verfahren nach Anspruch 8 oder 9, worin der Schritt des Bestimmens mit einer vorkonfigurierten Periodizität durchgeführt wird.

11. Verfahren nach einem der Ansprüche 8 bis 10, worin die Trägerbündelungseigenschaften eine Anzahl von Komponententrägern umfassen, die bei Verwendung der Zelle als eine primäre Zelle gebündelt werden können.

12. Verfahren nach einem der Ansprüche 8 bis 11, worin die Trägerbündelungseigenschaften eine Gesamtbandbreite umfassen, die bei Verwendung der Zelle als eine primäre Zelle gebündelt werden kann.

13. Verfahren nach einem der Ansprüche 8 bis 12, worin die Trägerbündelungseigenschaften der Zielzelle Information über eine oder mehrere der Zielzelle zugeordnete sekundäre Zellen umfassen.

14. Verfahren nach einem der Ansprüche 8 bis 13, worin die Zielverkehrslast die Verkehrslast von mit der Zielzelle verbundenen UEs einschließlich der Verkehrslast in einer oder mehreren der Zielzelle zugeordneten sekundären Zellen umfasst.

15. Netzwerkknoten (50) einer Quellenzelle, der dafür eingerichtet ist, Lastverteilung von der Quellenzelle zu einer Zielzelle zu unterstützen, wobei der Netzwerkknoten einen Prozessor (51), eine Kommunikationsschnittstelle (54) und einen Speicher (53) umfasst, wobei der Speicher durch den Prozessor ausführbare Anweisungen enthält, wobei der Netzwerkknoten **dadurch gekennzeichnet ist, dass** er betriebsfähig ist:
- Quellenverkehrslast und Trägerbündelungseigenschaften der Quellenzelle zu bestimmen,
- eine Lastmeldung von einem Zielnetzwerkknoten zu empfangen, welche die Zielverkehrslast und Trägerbündelungseigenschaften umfasst, die für die Zielzelle bestimmt wurden,
- Benutzereinrichtungs-(UE-)Trägerbündelungsfähigkeiten von UEs abzurufen, die durch die Quellenzelle versorgt werden; und
- eine oder mehrere durch die Quellenzelle versorgte UEs zum Umziehen zur Zielzelle auszuwählen, und zwar auf der Grundlage einer Kombination aus den abgerufenen UE-Trägerbündelungsfähigkeiten und den Trägerbündelungseigenschaften der Quellenzelle und der Zielzelle.

16. Netzwerkknoten nach Anspruch 15, worin die Trägerbündelungseigenschaften umfassen:
- eine Anzahl von Komponententrägern, die bei Verwendung der Zelle als eine primäre Zelle gebündelt werden können, und/oder
- eine Gesamtbandbreite, die bei Verwendung der Zelle als eine primäre Zelle gebündelt werden kann.

17. Netzwerkknoten (60) einer Zielzelle, der dafür eingerichtet ist, Lastverteilung von einer Quellenzelle zur Zielzelle zu unterstützen, wobei der Netzwerkknoten einen Prozessor (61), eine Kommunikationsschnittstelle (64) und einen Speicher (63) umfasst, wobei der Speicher durch den Prozessor ausführbare Anweisungen enthält, wobei der Netzwerkknoten **dadurch gekennzeichnet ist, dass** er betriebsfähig ist:
- Zielverkehrslast und Trägerbündelungseigenschaften der Zielzelle zu bestimmen,
- eine Lastmeldung an den Zielnetzwerkknoten zu senden, welche die bestimmten Zielverkehrslast und Trägerbündelungseigenschaften umfasst.

18. Netzwerkknoten nach Anspruch 17, ferner betriebsfähig, Information über eine oder mehrere zum Umziehen zur Zielzelle ausgewählte UEs, die durch die Quellenzelle versorgt werden, zu empfangen.

19. Netzwerkknoten nach Anspruch 17 oder 18, ferner betriebsfähig, Zielverkehrslast und Trägerbündelungseigenschaften mit einer vorkonfigurierten Periodizität zu bestimmen.

20. Computerlesbares Speichermedium mit einem darauf gespeicherten Computerprogramm, welches, wenn es in einem Netzwerkknoten ausgeführt wird, den Netzwerkknoten veranlasst, das Verfahren nach einem der Ansprüche 1 bis 14 durchzuführen.

## Revendications

1. Procédé, exécuté dans un noeud de réseau source (20S) d'une cellule source, pour le support d'une distribution de charge d'une cellule source vers une cellule cible dans un réseau sans fil utilisant une agrégation de porteuses, ce procédé étant **caractérisé par** les étapes suivantes :
- détermination (S31) d'une charge de trafic source et de propriétés d'agrégation de porteuses de la cellule source,
- réception (S32), en provenance d'un noeud de réseau cible, d'un rapport de charge comprenant une charge de trafic cible et des propriétés d'agrégation de porteuses pour la cellule cible,
- la récupération (S33) de capacités d'agrégation de porteuses d'équipement utilisateur, UE, d'UE desservis par la cellule source ; et
- la sélection (S34) d'une ou plusieurs UE desservis par la cellule source pour un déplacement vers la cellule cible sur la base d'une combinaison des capacités de porteuses d'UE et des propriétés d'agrégation de porteuses de la cellule source et de la cellule cible.

2. Procédé selon la revendication 1, dans lequel la sélection d'une ou plusieurs UE à déplacer de la cellule source vers la cellule cible est effectuée lorsqu'un rapport entre la charge de trafic source et la charge de trafic cible dépasse une valeur seuil.

3. Procédé selon la revendication 1 ou 2, dans lequel les propriétés d'agrégation de porteuses comprennent un nombre de porteuses de composantes possibles pour une agrégation à l'aide de la cellule en tant que cellule primaire.

4. Procédé selon l'une des revendications 1 à 3, dans lequel les propriétés d'agrégation de porteuses comprennent une bande passante totale possible pour une agrégation à l'aide de la cellule en tant que cellule primaire.

5. Procédé selon l'une des revendications 1 à 4, dans lequel les capacités d'agrégation de porteuses d'équipement utilisateur comprennent des informations sur la capacité d'UE à supporter de multiples porteuses de composantes sur la liaison montante et/ou la liaison descendante.

6. Procédé selon l'une des revendications précédentes, dans lequel les propriétés d'agrégation de porteuses comprennent des informations sur une ou plusieurs cellules secondaires associées avec la cellule source et/ou dans lequel les propriétés d'agrégation de porteuses de la cellule cible comprennent des informations sur une ou plusieurs cellules secondaires associées avec la cellule cible.

7. Procédé selon l'une des revendications précédentes, dans lequel la charge de trafic source comprend une charge de trafic d'UE connectés à la cellule source comprenant une charge de trafic dans une ou plusieurs cellules secondaires associées avec la cellule source et/ou dans lequel la charge de trafic cible comprend une charge de trafic d'UE connectés à la cellule cible comprenant une charge de trafic dans une ou plusieurs cellules secondaires associées avec la cellule cible.

8. Procédé, exécuté dans un noeud de réseau cible (20T) d'une cellule cible, de support d'une distribution de charge d'une cellule source vers une cellule cible dans un réseau sans fil utilisant une agrégation de porteuses, ce procédé étant **caractérisé par** les étapes suivantes :
- détermination (S41) d'une charge de trafic cible et des propriétés d'agrégation de porteuses de la cellule cible,
- envoi (S42), au noeud de réseau source, d'un rapport de charge comprenant la charge de trafic cible et les propriétés d'agrégation de porteuses déterminées.

9. Procédé selon la revendication 8, comprenant en outre la réception d'informations sur un ou plusieurs UE desservis par la cellule source sélectionnés pour le déplacement vers la cellule cible.

10. Procédé selon la revendication 8 ou 9, dans lequel l'étape de détermination est exécutée avec une périodicité pré-configurée.

11. Procédé selon l'une des revendications 8 à 10, dans lequel les propriétés d'agrégation de porteuses comprennent un nombre de porteuses de composantes qui peuvent être agrégées à l'aide de la cellule en tant que cellule primaire.

12. Procédé selon l'une des revendications 8 à 11, dans lequel les propriétés d'agrégation de porteuses comprennent une bande passante totale qui peut être agrégée à l'aide de la cellule en tant que cellule primaire.

13. Procédé selon l'une des revendications 8 à 12, dans lequel les propriétés d'agrégation de porteuses de la cellule cible comprennent des informations sur une ou plusieurs cellules secondaires associées avec la cellule cible.

14. Procédé selon l'une des revendications 8 à 13, dans lequel la charge de trafic cible comprend une charge de trafic d'UE connecté à la cellule cible comprenant une charge de trafic dans une ou plusieurs cellules secondaires associées avec la cellule cible.

15. Noeud de réseau (50) d'une cellule source, conçu pour supporter une distribution de charge de la cellule source vers une cellule cible, ce noeud de réseau comprenant un processeur (51), une interface de communication (54) et une mémoire (53), ladite mémoire contenant des instructions pouvant être exécutées par ledit processeur, le noeud de réseau étant **caractérisé en ce qu'**il est conçu pour :
- déterminer la charge de trafic source et les propriétés d'agrégation de porteuses de la cellule source,
- recevoir, en provenance d'un noeud de réseau cible, d'un rapport de charge comprenant une charge de trafic cible et les propriétés d'agrégation de porteuses déterminées pour la cellule cible,
- récupérer des capacités d'agrégation de porteuses d'UE, d'UE desservis par la cellule source ; et
- sélectionner un ou plusieurs UE desservis par le cellule source pour le déplacement vers la cellule cible sur la base d'une combinaison des capacités d'agrégation de porteuses d'UE récupérées et des propriétés d'agrégation de porteuses de la cellule source et de la cellule cible.

16. Noeud de réseau selon la revendication 15, dans lequel les propriétés d'agrégation de porteuses comprennent :
- un nombre de porteuses de composantes possible pour une agrégation à l'aide de la cellule en tant que cellule primaire et/ou
- une bande passante totale possible pour une agrégation à l'aide de la cellule en tant que cellule primaire.

17. Noeud de réseau (60) d'une cellule cible, conçu pour supporter une distribution de charge d'une cellule source à la cellule cible, le noeud de réseau comprenant un processeur (61), une interface de communication (64) et une mémoire (63), ladite mémoire contenant des instructions pouvant être exécutées par ledit processeur, le noeud de réseau étant conçu pour :
- déterminer une charge de trafic cible et des propriétés d'agrégation de porteuses de la cellule cible,
- envoyer, au noeud de réseau source, un rapport de charge comprenant la charge de trafic et les propriétés d'agrégation de porteuses déterminées.

18. Noeud de réseau selon la revendication 17, conçu en outre pour recevoir des informations sur un ou plusieurs UE desservis par la cellule source sélectionnés pour le déplacement vers la cellule cible.

19. Noeud de réseau selon la revendication 17 ou 18, conçu en outre pour déterminer une charge de trafic cible et des propriétés d'agrégation de porteuses avec une périodicité pré-configurée.

20. Support lisible par un ordinateur, comprenant un programme informatique stocké dessus qui, lorsqu'il est exécuté dans un noeud de réseau, fait en sorte que le noeud de réseau exécute le procédé selon l'une des revendications 1 à 14.
